# EUROPEAN PATENT SPECIFICATION

(11) **EP 2 177 284 B1**
(45) Date of publication and mention of the grant of the patent: **31.08.2011**
(21) Application number: 08017949.2
(22) Date of filing: 14.10.2008
(51) Int. Cl.: B21D 5/02, G01B 5/25, F16F 3/02, F16F 5/00

(54) **Method and device for calibrating a press brake**
Verfahren und Vorrichtung zur Kalibrierung einer Abkantpresse
Procédé et dispositif pour l'étalonnage d'une presse plieuse

(43) Date of publication of application: 21.04.2010
(73) Proprietor: Safan B.V., 7241CW Lochem (NL)
(72) Inventor: Wielens, Peter Hermanus Gerhardus, 7152 AZ Eibergen (NL); Schutte, Gerrit Willem, 7245 AD Laren (NL)
(74) Representative: 't Jong, Bastiaan Jacob

(56) References cited:
- WO-A-82/02360
- WO-A-92/01171
- FR-A- 2 607 172
- JP-A- 59 193 718
- US-A- 2 540 525
- US-A- 3 938 794

## Description

The invention relates to a method for calibrating a press brake having an upper beam and a lower beam, which beams are substantially parallel and can be pressed towards each other.

Press brakes are becoming more and more accurate and the users of such press brakes are making products, which also are more and more accurate. Accordingly, it is necessary that the pressing surfaces of the upper beam and lower beam of a press brake are parallel to each other within very small tolerances. If parts of the beams are not parallel to each other, which results in height differences between parts of the beams, the products bent will also vary in dimension, like a variation in the bending angle.

With press brakes it is not necessary that the beam on its own is exactly straight, but it is more important that the pressing surfaces of the upper beam and lower beam are parallel to each other, i.e. that the distance between the upper beam and lower beam is constant at any position along the beams. So a beam may be slightly curved, as long as the upper beam and lower beam are parallel. Even then sheet can be bent resulting in a constant bending angle along the length of the bending line.

In order to arrive at a calibrated press brake with parallel upper beam and lower beam it is common to arrange tools in the upper beam and lower beam and position a number of sheet parts along the length of the beams. Then the sheet parts are bent all at once and afterwards the different sheet parts are compared to each other. Depending on the differences in bending angle, the curvature of the beams is adjusted and another bending cycle is performed with new sheet portions in order to check the results of the adjustments. These steps are repeated a number of times to arrive at a calibrated press brake.

Besides the disadvantage of the necessary time to calibrate a press brake, the common method has also some elements which influence the tolerances in a negative way.

First of all, with the common method it is necessary to use tools clamped into the upper and lower beams. These tools all are made within some tolerances, which influence the calibration. Also the sheet portions vary in thickness. A common sheet is produced by a rolling process resulting in a sheet in which the center is slightly thicker than the edges of the sheet. When portions are cut out of the sheet, these portions could be from any part of the sheet and therefore vary in thickness. Also this influences the calibration process.

It is furthermore difficult to verify the calibration. On should in fact place again a number of sheet portions in the press brake, bend the sheet portions and verify that the bending angle of all sheet portion is within the desired tolerances.

It is therefore an object of the invention to provide a method in which the disadvantages of the prior art method are reduced or even non-existent.

This object is achieved by a method comprising the steps of:
placing a compressible object in between the beams;
pressing the beams towards each other, thereby compressing the object to a position wherein the outer ends of the beams have a first predetermined distance;
measuring the distance between the beams at the position of the compressible object; and
adjusting the curvature of the beams, such that the measured distance is equal to a second predetermined distance.

By compressing the compressible object any play still present between the surfaces of upper beam and upper tool adapter on one side and between the surfaces of lower beam and lower tool adapter on the other side is removed. It is also possible to compensate for deformations of the beams and the frame as a result of the exerted pressure. By setting the outer ends of the beams at a first predetermined distance, one can easily measure whether the remaining parts of the beams are also at a second predetermined distance. Accordingly the curvature of the beams can be adjusted to arrive at this second predetermined distance.

It is common that the beams within a press brake are connected on either side to the frame of the press brake. At these positions a position encoder is arranged which communicates with the control of the press brake and makes it possible to have the control operate the movement of the beams. These position encoders are already calibrated and provide a good reference for the measurements of the remaining parts of the beams. When using the compressible object of the method according to the invention it is also possible to calibrate the position encoders such, that the values provided by the position encoders correspond to values measured when performing the method according to the invention.

Instead of measuring the distance, it is also possible to measure the force exerted on the compressible object. When assuming that the spring constant of the compressible object is not variable, there is a direct relationship between the exerted force and the compression of the compressible object and thus the measured distance. In some circumstances it can be of advantage to measure the force instead of the distance.

In a preferred embodiment the second predetermined distance is equal to the first predetermined distance. This results in the upper beam and lower beam being fully parallel to each other within the desired tolerances. It is however possible to choose the second predetermined distance differently to arrive at a desired predictable deviation.

The distance between the beams is measured in the press direction of the beams (typically called the Y-direction). This is the direction perpendicular to the length of both beams.

In another preferred embodiment of the method according to the invention the beams are moved away from each other, after adjusting the curvature of the beams, the compressible object is moved along the beams to another position, and the step of pressing beams towards each other, the measuring step and the adjusting step are repeated. By performing these steps for a number of positions for the compressible object it is possible to make sure that the distance between the upper beam and lower beam are set to a predetermined distance along the length.

In yet another embodiment the second predetermined distance depends on the position of the compressible object along the length of the beams. It is then possible to provide a predetermined deviation curve for the distance between the two beams along its length.

In yet another embodiment of the method according to the invention, the spring constant of the compressible object is set to a predetermined value. With this spring constant it is possible to simulate the operating pressures common to the use of the press brake. This pressure is of course dependent on the amount of compression of the compressible object, but as the first predetermined distance of the beams is known, it can be calculated which spring constant is necessary to simulate a certain pressure. It would be also possible to have filler elements or adapters between the beam and the compressible object to arrive at a certain compression of the compressible object with a first predetermined distance of the beams.

In yet another preferred embodiment of the method according to the invention the press brake comprises a back gauge and one of the beams comprises an L-shaped tool of which one leg is clamped into the beam and the other leg extends towards and perpendicular to the back gauge, the method further comprising the steps of:
after pressing the beams towards each other and compressing the object, measuring the distance from the tip of the extending leg of the L-shaped tool to the back gauge;
adjusting the curvature of the beam clamping the L-shaped tool such that the measured distance is equal to a third predetermined distance.

Besides the deviation in parallelism of the beams, which is typically in a vertical direction, the beams could also have a deviation in horizontal direction. When a back gauge is used this horizontal deviation also influences the accuracy of the products made on a press brake. In such circumstances it is desired to also calibrate the horizontal curvature of the beams. Also when calibrating the horizontal curvature of the beams it is desired to measure when the beams are under pressure, i.e. when compressing a compressible object. This avoids any play within the press brake, which increases the accuracy of the measurements.

It should be clear that the L-shaped tool could be shaped differently, as long as the tool comprises a part which can be clamped into the beam and comprises a leg, which extends perpendicular to the press direction. So, the tool could for example also be T-shaped or cross-shaped.

The distance from the tip of the extending leg of the L-shaped tool to the back gauge is measured in a direction perpendicular to the length of the beams and perpendicular to the pressed direction.

The invention not relates to a device for calibrating a press brake with a method according to the invention. This device comprises:
a housing, having a base surface;
a support movably arranged at the housing, wherein the support surface is parallel to the base surface; and
spring means arranged between the support and the housing.

This device provides a compressible object which can be placed between the upper beam and lower beam while performing the method according to the invention.

Preferably, the spring means comprise disc springs. These disc springs can provide a high spring constant, such that the device can be made compact while providing sufficient counter pressure.

It can also be of advantage when the spring means are arranged under tension. This reduces the distance the press brake has to compress the compressible object in order to arrive at a pressure similar to the operating pressures.

In another embodiment of the device the spring means comprise a hydraulic cylinder. Preferably a pressure gauge is provided connected to the hydraulic cylinder. Also a hydraulic cylinder can provide a high counter pressure while maintaining the device compact. Furthermore, by providing a pressure gauge it is possible to directly measure at which pressure the press brake is calibrated.

In a very preferred embodiment of the device, the device comprises a measuring device for measuring the distance between the support surface and the base surface. This measuring device could be a dial indicator with which distances with an accuracy of micrometers can be measured. Instead of a dial indicator it is also possible to have other measuring devices, for example electronic measuring devices. With an electronic measuring device it is possible to send the measuring data to a computer, which is in particular of advantage when a specific curvature in the deviation of the parallelism of the beams is desired.

With this method according to the invention a press brake can easily be calibrated, but also the calibration can be verified by performing the steps of the method and check whether the measured distances are corresponding to the predetermined values.

These and other features of the invention will be elucidated in conjunction with the accompanying drawings.
Figure 1 shows in perspective view a press brake with a device clamped between the upper and lower beam.
Figure 2 shows in perspective view the device according to figure 1.
Figure 3 shows a cross-sectional perspective view of the device according to figures 1 and 2.
Figures 4, 5 and 6 show schematically the steps of an embodiment of the method according to the invention.
Figure 7 shows in cross-sectional view the measuring device according to figures 1 and 2 with an L-shaped tool clamped into the upper beam.

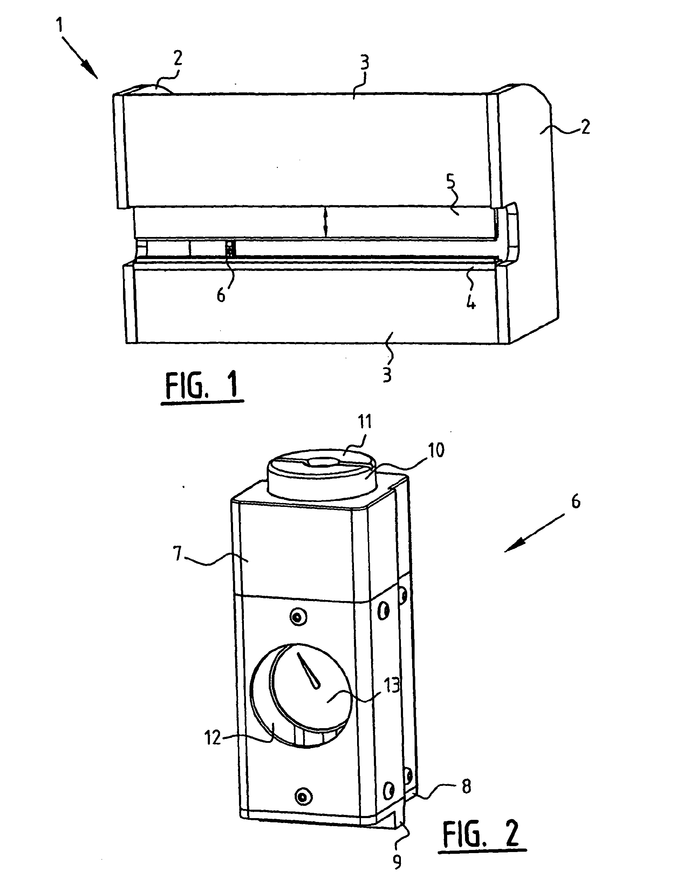

In figure 1 a press brake 1 is shown. This press brake 1 has two C-frame sections 2 which are connected to each other by two frame parts 3. The bottom frame part 3 comprises the lower beam 4 and the upper frame part 3 comprises a movable upper beam 5. The upper beam 5 can be pressed towards the lower beam 4.

Between the lower beam 4 and the upper beam 5 a device 6 is placed. This device 6 is shown in more detail in figure 2.

The device 6 comprises a housing 7 with a base surface 8. On this base surface a rib 9 is provided, which can be placed in the groove, which is generally available in the lower beam 4. This rib 9 prevents that the device 6 is erroneously placed between the beams 4, 5.

At the top of the housing 7 a movable support 10 is arranged, which can be pressed into the housing 7. This movable support 10 has a support surface 11, which is in contact with the upper beam 5 in the position shown in figure 1.

The housing 7 has an opening 12 through which a dial indicator 13 is visible, which shows the compression of the support 10 into the housing 7.

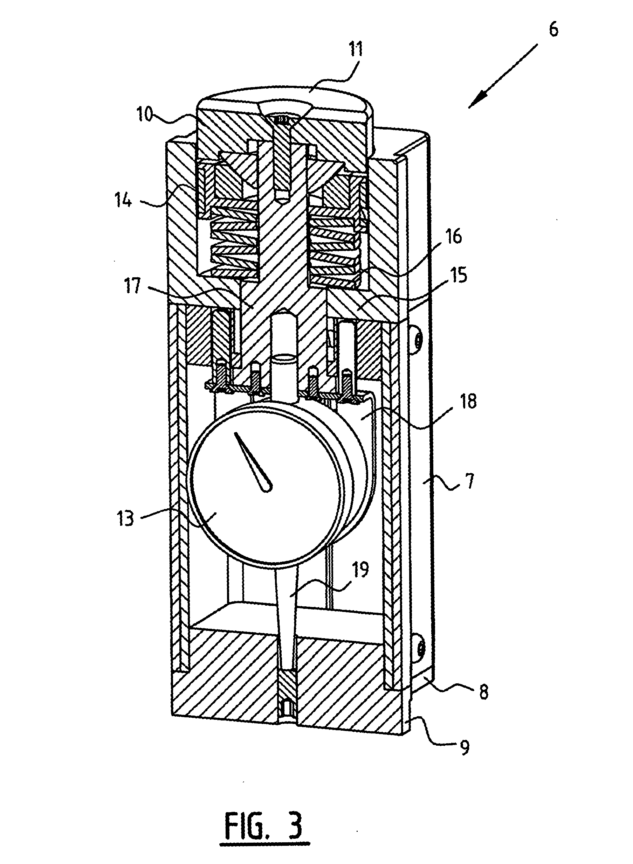

In figure 3 the device 6 is shown in cross section. The support 10 is guided into the housing 7 by a bearing 14. The housing 7 is furthermore provided with an inner ridge 15 onto which a number of disc springs 16 are arranged which provide for the compressibility of the support 10 into the housing 7 and which also provides for the counter force when the device 6 is compressed by the upper and lower beam 4, 5.

The support 10 is connected through an axis 17 to a support 18 on which the dial indicator 13 is arranged. The measuring pin 19 of the dial indicator 13 rests on the bottom of the housing 7 such that the dial indicator can measure the distance between the support 10 and the bottom of the housing 7, in particular distance between the support surface 11 and the base surface 8.

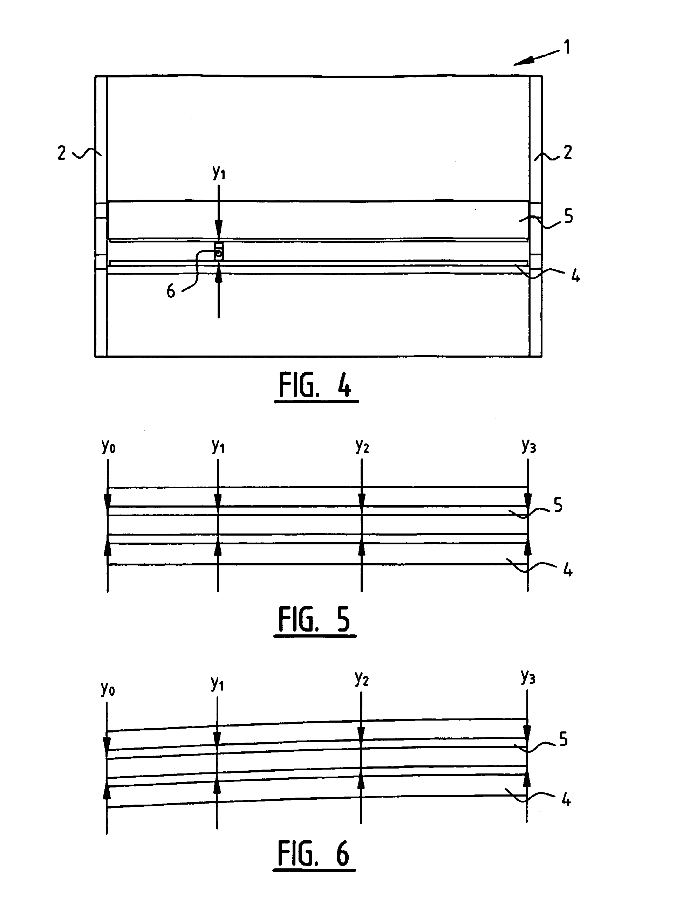

In figure 4 the placement of the device 6 in the press brake 1 is shown. Typically the movable upper beam 5 has a position encoder placed near both the C-frame parts 2. With these encoders (not shown) it is possible to measure the distance Y0 and Y3 (see figure 5). For this example, it is assumed that the encoders will provide the same values as the measuring device 6. So, when the measuring device is placed near a C-frame part 2, the position encoder and the measuring device should both indicate the same value. In other cases it could be that there is an offset between the values of the encoders and the measuring device, which offset should be taken into account.

Now when the measuring device 6 is placed between the upper beam and lower beam 4 and the beam 5 is moved downwardly, such that the device 6 is compressed, the dial indicator 13 will show the compression. Now when the measurements of the encoders is controlled equal, i.e. such that Y0 equals Y3, one can calculate the difference from the measurement Y1 of the device 6 ([Delta]Y=Y1-Y0). Based on this measurement the curvature of the lower beam 4 and/or the upper beam 5 is adjusted, such that the difference is zero, (i.e. [Delta]Y=0). Such adjustments to the upper and lower beams 4, 5 are common and generally performed by displacing wedges arranged between the beam and the frame portion 3.

When the distance Y1 is set to the predetermined distance, which could equal Y0 and Y3 a second position for the device 6 can be determined and the distance Y2 can be measured. Again by adjusting the curvature, the distance Y2 can be set to the predetermined value.

As shown in figure 6 it is not necessary to have the curvature of the upper beam 5 and lower beam 4 as a straight line. It could also be curved as long as the distance between the upper beam 5 and the lower beam 4, i.e. Y0, Y1, Y2, Y3 is set to a desired value, such that Y0=Y1=Y2=Y3. This ensures that when bending a sheet equal pressure is applied along the complete length of the bending line resulting in a product with small tolerances.

It should be noted that in the case of a predetermined deviation curve, the values Y0, Y1, Y2 and Y3 would of course differ from each other and that the resulting pressure applied along the complete length of the bending line would also differ accordingly.

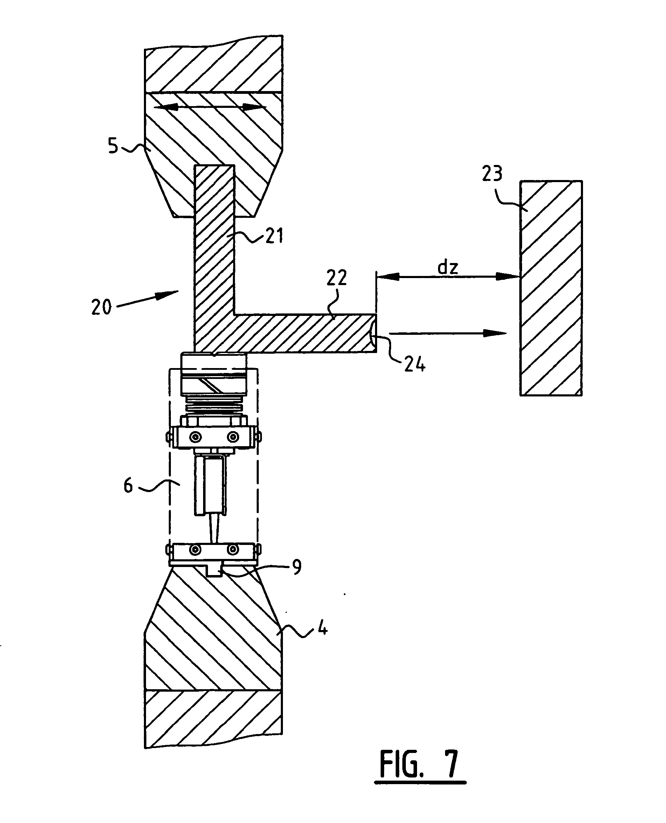

In figure 7 a cross-sectional view is shown of the upper beam 5, the lower beam 4 and the device 6 placed in between. In the upper beam 5 an L-shaped tool 20 is clamped having a first leg 21 clamped into the beam 5 and a second leg 22 extending towards a back gauge 23. This back gauge is used to define a fixed support against which the sheet to be bent can be placed ensuring that the bend is arranged at the correct location.

When the upper beam 5 and lower beam 4 are pressed together such that the device 6 is compressed and the measurements are made to correct possible deviations it is also possible the distance dz between the tip 24 of the leg 22 to the back gauge 23. Depending on the measurements it is possible to adjust the upper beam 5 in the same direction as the measurement in the figure horizontally, such that dz is set to a desired predetermined distance.

The measurement of dz could be performed by an optical measuring device present in the tip 24.

## Claims

1. Method for calibrating a press brake (1) having an upper beam (5) and a lower beam (4), which beams (4, 5) are substantially parallel and can be pressed towards each other, the method comprising the steps of:
- placing a compressible object (6) in between the beams (4, 5);
- pressing the beams (4, 5) towards each other, thereby compressing the object (6) to a position wherein the outer ends of the beams (4, 5) have a first predetermined distance;
- measuring the distance between the beams (4, 5) at the position of the compressible object (6); and
- adjusting the curvature of the beams (4, 5), such that the measured distance is equal to a second predetermined distance.

2. Method according to claim 1, wherein the second predetermined distance is equal to the first predetermined distance.

3. Method according to claim 1 or 2, wherein the distance between the beams (4, 5) is measured in the press direction of the beams (4, 5).

4. Method according to any of the preceding claims, wherein after adjusting the curvature of the beams (4, 5), the beams (4, 5) are moved away from each other, the compressible object (6) is moved along the beams (4, 5) to another position, and the step of pressing the beams (4, 5) towards each other, the measuring step and the adjusting step are repeated.

5. Method according to claim 4, wherein the second predetermined distance depends on the position of the compressible object (6) along the length of the beams (4, 5).

6. Method according to any of the preceding claims, wherein the spring constant of the compressible object (6) is set to a predetermined value.

7. Method according to any of the preceding claims, wherein the press brake (1) comprises a back gauge (23) and one of the beams (5) comprises an L-shaped tool (20), of which one leg (21) is clamped into the beam (5) and the other leg (22) extends towards and perpendicular to the back gauge (23), the method further comprising the steps of:
- after pressing the beams (4, 5) towards each other and compressing the object (6), measuring the distance from the tip (24) of the extending leg (22) of the L-shaped tool (20) to the back gauge;
- adjusting the curvature of the beam clamping the L-shaped tool (20) such that the measured distance is equal to a third predetermined distance.

8. Method according to claim 7, wherein the distance from the tip (24) of the extending leg (22) of the L-shaped tool (20) to the back gauge (23) is measured in a direction perpendicular to the length of the beams (4, 5) and perpendicular to the press direction.

9. Method according to claim 7 or 8, wherein both beams (4, 5) are calibrated in relation to the back gauge (23).

## Patentansprüche

1. Verfahren zum Kalibrieren einer Gesenkbiegepresse (1), umfassend einen oberen Balken (5) und einen unteren Balken (4), wobei die Balken (4, 5) im Wesentlichen parallel sind und aufeinander gepresst werden können, wobei das Verfahren die folgenden Schritte umfasst:
anbringen eines komprimierbaren Gegenstands (6) zwischen den Balken (4, 5);
pressen der Balken (4, 5) aufeinander, wodurch der Gegenstand (6) komprimiert wird, in eine Position, in der die äußeren Enden der Balken (4, 5) einen ersten vorbestimmten Abstand aufweisen;
messen des Abstands zwischen den Balken (4, 5) an der Position des komprimierbaren Gegenstands (6); und
einstellen der Krümmung der Balken (4, 5), sodass der gemessene Abstand gleich einem zweiten vorbestimmten Abstand ist.

2. Verfahren nach Anspruch 1, wobei der zweite vorbestimmte Abstand gleich dem ersten vorbestimmten Abstand ist.

3. Verfahren nach Anspruch 1 oder 2, wobei der Abstand zwischen den Balken (4,5) in der Pressrichtung der Balken (4,5) gemessen wird.

4. Verfahren nach einem der vorhergehenden Ansprüche, wobei nach dem Einstellen der Krümmung der Balken (4,5), die Balken (4, 5) voneinander bewegt werden, der komprimierbare Gegenstand (6) entlang der Balken (4, 5) in eine andere Position bewegt wird und der Schritt des Pressens der Balken (4, 5) zueinander, der Messschritt und der Einstellungsschritt wiederholt werden.

5. Verfahren nach Anspruch 4, wobei der zweite vorbestimmte Abstand von der Position des komprimierbaren Gegenstands (6) entlang der Länge der Balken (4, 5) abhängt.

6. Verfahren nach einem der vorhergehenden Ansprüche, wobei die Federkonstante des komprimierbaren Gegenstands (6) auf einen vorbestimmten Wert eingestellt wird.

7. Verfahren nach einem der vorhergehenden Ansprüche, wobei die Gesenkbiegepresse (1) einen Rückanschlag (23) umfasst und einer der Balken (5) ein L-förmiges Werkzeug (20) umfasst, von dem ein Schenkel (21) in den Balken (5) geklemmt ist und der andere Schenkel (22) sich auf den und senkrecht zum Rückanschlag (23) erstreckt, wobei das Verfahren weiter die folgenden Schritte umfasst:
nach dem Pressen der Balken (4, 5) aufeinander und Komprimieren des Gegenstands (6) Messen des Abstands von der Spitze (24) des sich erstreckenden Schenkels (22) des L-förmigen Werkzeugs (20) zum Rückanschlag,
einstellen der Krümmung des Balkens, der das L-förmige Werkzeug (20) klemmt, so dass der gemessene Abstand gleich einem dritten vorbestimmten Abstand ist.

8. Verfahren nach Anspruch 7, wobei der Abstand von der Spitze (24) des sich erstreckenden Schenkels (22) des L-förmigen Werkzeugs (20) zum Rückanschlag (23) in einer Richtung gemessen wird, die senkrecht zur Länge der Balken (4,5) ist und senkrecht zur Pressrichtung ist.

9. Verfahren nach Anspruch 7 oder 8, wobei beide Balken (4, 5) bezüglich des Rückanschlags (23) kalibriert werden.

## Revendications

1. Procédé pour l'étalonnage d'une presse plieuse (1) ayant une poutre supérieure (5) et une presse inférieure (4), lesquelles poutres (4, 5) sont sensiblement parallèles et peuvent être pressées l'une vers l'autre, le procédé comprenant les étapes consistant à :
- placer un objet compressible (6) entre les poutres (4, 5) ;
- presser les poutres (4, 5) l'une vers l'autre, comprimant de la sorte l'objet (6) dans une position dans laquelle les extrémités externes des poutres (4, 5) ont une première distance prédéterminée ;
- mesurer la distance entre les poutres (4, 5) dans la position de l'objet compressible (6) ; et
- ajuster la courbure des poutres (4, 5) de sorte que la distance mesurée soit égale à une seconde distance prédéterminée.

2. Procédé selon la revendication 1, dans lequel la seconde distance prédéterminée est égale à la première distance prédéterminée.

3. Procédé selon la revendication 1 ou 2, dans lequel la distance entre les poutres (4, 5) est mesurée dans la direction de pressage des poutres (4, 5).

4. Procédé selon l'une quelconque des revendications précédentes, dans lequel, après ajustement de la courbure des poutres (4, 5), les poutres (4, 5) sont écartées l'une de l'autre, l'objet compressible (6) est déplacé le long des poutres (4, 5) dans une autre position et l'on répète l'étape de pression des poutres (4, 5à l'une vers l'autre, l'étape de mesure et l'étape d'ajustement.

5. Procédé selon la revendication 4, dans lequel la seconde distance prédéterminée dépend de la position de l'objet compressible (6) sur la longueur des poutres (4, 5).

6. Procédé selon l'une quelconque des revendications précédentes, dans lequel la constante de rappel de l'objet compressible (6) est réglée à une valeur prédéterminée.

7. Procédé selon l'une quelconque des revendications précédentes, dans lequel la presse plieuse (1) comprend une jauge d'appui (23) et l'une des poutres (5) comprend un outil enforme de L (20), dont une branche (21) est bloquée sur la poutre (5) et l'autre branche (22) s'étend vers la jauge d'appui (23), perpendiculairement à celui-ci, le procédé comprenant par ailleurs les étapes consistant à :
- mesurer, après pression des poutres (4, 5) l'une vers l'autre et compression de l'objet (6), la distance de la pointe (24) de la branche allongée (22) de l'outil en forme de L (20) à la jauge d'appui ; et
- ajuster la courbure de la poutre bloquant l'outil en forme de L (20) de sorte que la distance mesurée soit égale à une troisième distance prédéterminée.

8. Procédé selon la revendication 7, dans lequel la distance de la pointe (24) de la branche allongée (22) de l'outil en forme de L (20) à la jauge d'appui (23) est mesurée dans une direction perpendiculaire à la longueur des poutres (4, 5) et perpendiculaire à la direction de pression.

9. Procédé selon la revendication 7 ou 8, dans lequel les deux poutres (4, 5) sont étalonnées en fonction de la jauge d'appui (23).
